# EUROPÄISCHE PATENTSCHRIFT

(11) **EP 1 368 423 B1**
(45) Veröffentlichungstag und Bekanntmachung des Hinweises auf die Patenterteilung: **01.12.2004**
(21) Anmeldenummer: 01991833.3
(22) Anmeldetag: 12.12.2001
(51) Int. Cl.: C08K 13/02, C08L 57/08

(54) **CHLORATHALTIGES STABILISATORSYSTEM MIT STICKSTOFFHALTIGEN SYNERGISTEN ZUR STABILISIERUNG VON HALOGENHALTIGEN POLYMEREN**
CHLORATE-CONTAINING STABILIZER SYSTEM WITH NITROGEN-CONTAINING SYNERGISTS FOR STABILIZING HALOGEN-CONTAINING POLYMERS
SYSTEME STABILISATEUR A BASE DE CHLORATE CONTENANT DES SYNERGISTES A BASE D'AZOTE, UTILISE POUR STABILISER DES POLYMERES HALOGENES

(30) Priorität: 16.02.2001 DE 10107329
(43) Veröffentlichungstag der Anmeldung: 10.12.2003
(60) Teilanmeldung: 04009269.4
(73) Patentinhaber: Crompton Vinyl Additives GmbH, 68623 Lampertheim (DE)
(72) Erfinder: FRIEDRICH, Hans-Helmut, 64686 Lautertal-Gadernheim (DE); WEHNER, Wolfgang, 64673 Zwingenberg (DE)
(86) Internationale Anmeldenummer: PCT/EP2001/014606
(87) Internationale Veröffentlichungsnummer: WO 2002/072684

(56) Entgegenhaltungen:
- DATABASE WPI Section Ch, Week 197532 Derwent Publications Ltd., London, GB; Class A60, AN 1975-53061W XP002200154 & JP 50 039342 A (MIZUSAWA CHEMICAL IND KK), 11. April 1975 (1975-04-11)
- PATENT ABSTRACTS OF JAPAN vol. 012, no. 279 (C-517), 1. August 1988 (1988-08-01) & JP 63 057656 A (AKISHIMA KAGAKU KOGYO KK), 12. März 1988 (1988-03-12)
- DATABASE WPI Section Ch, Week 198527 Derwent Publications Ltd., London, GB; Class A14, AN 1985-162971 XP002200167 & JP 60 094440 A (NISSAN FERRO YUKI KAGAKU CO), 27. Mai 1985 (1985-05-27)
- DATABASE WPI Section Ch, Week 198527 Derwent Publications Ltd., London, GB; Class A14, AN 1985-162972 XP002200168 & JP 60 094441 A (NISSAN FERRO YUKI KAGAKU CO), 27. Mai 1985 (1985-05-27)

## Beschreibung

Die Erfindung betrifft Stabilisatorsysteme umfassend mindestens ein Perchlorat-Salz und mindestens eine oder mehrere Verbindungen der Enamine, die sich zur Stabilisierung halogenhaltiger Polymere eignen.

Ein halogenhaltiges Polymer wie zum Beispiel PVC kann durch eine Reihe von Zusatzstoffen stabilisiert werden. Verbindungen des Bleis, Bariums und Cadmiums sind dafür besonders gut geeignet, sind jedoch heute aus ökologischen Gründen oder wegen ihres Schwermetallgehalts umstritten (vgl. "Kunststoffadditive", R. Gächter/H. Müller, Carl Hanser Verlag, 3. Aufl. 1989, Seiten 303-311 (siehe auch 4. Auflage 2001); und "Kunststoff Handbuch PVC", Band 2/1, W. Becker/D. Braun, Carl Hanser Verlag, 2. Aufl., 1985, Seiten 531 - 538; sowie Kirk-Othmer: "Encyclopedia of Chemical Technology", 4^{th} Ed., 1994, Vol. 12, Heat Stabilizers, S. 1071 - 1091).

Man sucht daher weiter nach wirksamen Stabilisatoren und Stabilisatorsystemen, welche frei von Blei, Barium und Cadmium sind.

Es wurde nun gefunden, dass sich Systeme aus mindestens einer oder mehreren Verbindungen der Enamine und mindestens einem Perchlorat-Salz sich besonders gut zur Stabilisierung von chlorhaltigen Polymeren, insbesondere PVC, eignen.

Überraschend deswegen, weil Mischungen aus Aminocrotonsäureestern und Epoxid-Verbindungen "nichtspezifische" Effekte zeigen.

Ein Gegenstand der vorliegenden Erfindung sind daher Stabilisatorsysteme, umfassend mindestens
a) ein Perchlorat-Salz und
b) mindestens ein oder mehrere Enamine
wobei die Enamine die Formel (I) haben 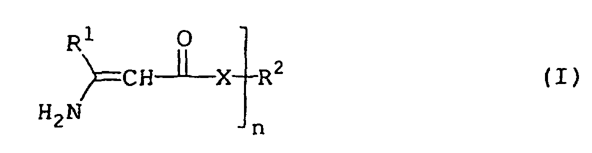 worin bedeuten
n = 1 oder 2 und X = O oder NR¹,
n = 3 - 6 und X = O;
R¹ = H, C₁-C₄-Alkyl, C₂-C₆-Alkenyl, C₆-C₁₀-Aryl, C₇-C₁₈-Alkaryl oder C₇-C₁₈-Aralkyl;
R² (für n = 1) = C₁-C₂₂-Alkyl, C₂-C₂₂-Alkenyl oder Aryl, bevorzugt Phenyl, gegebenenfalls mit bis zu 3 Hydroxy, C₁-C₄-Alkoxy oder C₁-C₉-Alkyl substituiert; oder R² (für n = 2 - 6) = lineares oder verzweigtes Cₙ₋₂₂-Alkylen, gegebenenfalls durch 1 oder mehrere O- oder S-Atome unterbrochen, wobei R² (für n = 3) auch C₂-C₃-Alkyl-tri-substituiertes Isocyanurat sein kann, wenn X = NH kann R² auch H sein;

Bei den Enaminen der allgemeinen Formel (I) (X = O oder NH) handelt es sich z.B. um Verbindungen mit R¹ = Wasserstoff, Methyl, Ethyl, *n*-Propyl, *iso*-Propyl, *n*-Butyl, *iso*-Butyl, *sec*-Butyl, *tert*-Butyl, Allyl, Phenyl oder Benzyl, R² (für n = 1) = 1-Octyl, 2-Ethylhexyl, *n*-Decyl, *n*-Dodecyl, *n*-Tetradecyl, *n*-Hexadecyl, *n*-Octadecyl, Oleyl, Dihydroxystearyl, Trihydroxystearyl oder Ricinolyl, R² (für n = 2) = abgeleitet von der entsprechenden R²-(OH)₂ Verbindung Ethandiol, Butan-1,4-diol, Butandiol-1,3-Butandiol-2,3, Hexan-1,6-diol, Neopentylenglycol, Dialkylenglycol, Trialkylenglycol, Tetraalkylenglycol, Pentaalkylengiycol, Hexaalkylenglycol, vorzugsweise mit Alkylen = Ethylen, Propylen oder Butylen, Thiodialkylenglycol, Dithiotrialkylenglycol, Trithiotetraalkylenglycol, Tetrathiopentaalkylenglycol, Pentathiohexaalkylenglycol, vorzugsweise mit Alkylen = Ethylen, oder Neopentylenglycol, R² (für n = 3) = abgeleitet von der entsprechenden R²-(OH)₃ Verbindung Glycerin, Trishydroxyethyl-isocyanurat, Trishydroxypropylisocyanurat, Trimethylolethan oder Trimethylolpropan, R² (für n = 4) = abgeleitet von der entsprechenden R²-(OH)₄ Verbindung Erythrit, Xylit, Pentaerythrit, Bistrimethylolethan oder Bistrimethylolpropan, R² (für n = 6) = abgeleitet von der entsprechenden R²-(OH)₆ Verbindung Sorbit, Mannit oder Dipentaerythrit.

Bevorzugt sind Enamine mit R¹ = Methyl oder Phenyl.

Die Enamine der allgemeinen Formel (I) können nach bekannten Methoden durch Acylierung und Aminierung der entsprechenden R²-OH bzw. R²-NH₂ Verbindung hergestellt werden (siehe u.a. DE-PS 1,544,768).

Bevorzugt sind β-Aminocrotonsäureester- oder β-Arninozimtsäureesterverbindungen der allgemeinen Formel (I). Besonders bevorzugt sind Verbindungen der allgemeinen Formel (I), die 1,4-Butandiol-bis(β-aminocrotonat), 2,3-Butandiol-bis(β-aminocrotonat), 1,2-Dipropylenglycol-bis(β-aminocrotonat oder Thiodiethylenglycol-bis(β-aminocrotonat)entsprechen.

Die Perchlorat-Salze sind dem Fachmann bekannt. Beispiele sind diejenigen der Formel M(ClO₄)ₙ, wobei M für Li, Na, K, Mg, Ca, Sr, Ba, Zn, Al, La oder Ce steht. Der Index n ist entsprechend der Wertigkeit von M 1, 2 oder 3.
Die Perchlorat-Salze können dabei in verschiedenen gängigen Darreichungsformen eingesetzt werden; z. B. als Salz oder Lösung in Wasser oder einem organischen Solvens als solches bzw. aufgezogen auf ein Trägermaterial wie PVC, Ca-Silikat, Zeolithe oder Hydrotalcite. Beispiele sind z.B. Perchloratsalze, die mit Alkoholen (Polyolen, Cyclodextrinen) oder Ätheralkoholen bzw. Esteralkoholen oder Kronenethern komplexiert oder gelöst sind. Weitere Ausführungsformen werden beschrieben in EP 0 394 547, EP 0 457 471 und WO 94/24200.

Vorzugsweise werden Natriumperchlorat bzw. Kaliumperchlorat verwendet.

Ein weiterer Gegenstand der Erfindung sind Kombinationen der Stabilisatorsysteme umfassend mindestens ein Perchlorat-Salz und mindestens eine oder mehrere Verbindungen aus den Gruppen der Verbindungen der allgemeinen Formel (I) mit mindestens einem oder mehreren anderen üblichen Additiven bzw. Stabilisatoren. Bevorzugt sind Polyole und/oder Disaccharidalkohole, Glycidylverbindungen, Hydrotalcite, Zeolithe (Alkali bzw. Erdalkalialumosilikate), Füllstoffe, Metallseifen, Alkali und Erdalkali-Verbindungen wie Oxide und Hydroxide, Gleitmittel, Weichmacher, Phosphite, Pigmente, epoxidierte. Fettsäureester und andere Epoxidverbindungen, Antioxidantien, UV-Absorber und Lichtschutzmittel, optische Aufheller, Treibmittel. Besonders bevorzugt sind epoxidierte Sojaöle, Erdalkali- oder Aluminiumseifen und Phosphite.

Besonders bevorzugt sind solche Komponenten, die zur Herstellung von physiologisch unbedenklichen Artikeln geeignet sind.

Mitumfaßt sind auch die möglichen.Reaktionsprodukte der eingesetzten Komponenten.

Beispiele für solche zusätzlichen Komponenten sind weiter unten aufgeführt und erläutert (vgl. "Handbook of PVC-Formulating" von E. J. Wickson, John Wiley & Sons, New York, 1993 und Synoptic Document No. 7, Scientific Committee for Food (SCF) - EU).

### Polyole und Disaccharidalkohole

Als Verbindungen dieses Typs kommen beispielsweise in Betracht:
Glycerin, Pentaerythrit, Dipentaerythrit, Tripentaerythrit, Trimethylolethan, Bistrimethylolpropan, Polyvinylalkohol, Bistrimethylolethan, Trimethylolpropan,Zucker, Zuckeralkohole.
Bevorzugt sind davon Pentaerythrit, Trimethylolpropan, Sorbit und die Disaccharidalkohole wie Malbit, Laktit und Cellobiit sowie Palatinit.
Verwendung finden können auch Polyolsirupe, wie Sorbit-, Mannit- und Maltitsirup.
Die Polyole können in einer Menge von beispielsweise 0,01 bis 20, zweckmäßig von 0,1 bis 20 und insbesondere von 0,1 bis 10. Gew.-Teilen, bezogen auf 100 Gew.-Teile PVC, angewandt werden.

### Glycidylverbindungen

Sie enthalten die Glycidylgruppe 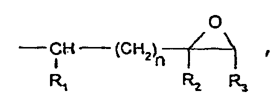 wobei diese direkt an Kohlenstoff, Sauerstoff-, Stickstoff- oder Schwefelatome gebunden ist, und worin entweder R₁ und R₃ beide Wasserstoff sind, R₂ Wasserstoff oder Methyl und n = 0 ist, oder worin R₁ und R₃ zusammen -CH₂-CH₂- oder -CH₂-CH₂-CH₂- bedeuten, R₂ dann Wasserstoff und n = 0 oder 1 ist. Vorzugsweise finden Glycidylverbindungen mit zwei funktionellen Gruppen Verwendung. Es können aber auch prinzipiell Glycidylverbindungen mit einer, drei oder mehr funktionellen Gruppen eingesetzt werden.
Vorwiegend werden Diglycidylverbindungen mit aromatischen Gruppen eingesetzt.
Die endständigen Epoxidverbindungen können in einer Menge von vorzugsweise mindestens 0,1 Teil, beispielsweise 0,1 bis 50, zweckmäßig 1 bis 30 und insbesondere 1 bis 25 Gew.-Teilen, bezogen auf 100 Gew.-Teile PVC, eingesetzt werden.

### Hydrotalcite

Die chemische Zusammensetzung dieser Verbindungen ist dem Fachmann bekannt, z. B. aus den Patentschriften DE 3 843 581, US 4,000,100, EP 0 062 813 und WO 93/20135.
Verbindungen aus der Reihe der Hydrotalcite können durch die folgende allgemeine Formel

M²⁺ ₁₋ₓ M³⁺ ₓ(OH)₂ (A^{b-}) _{x/b} . d H₂O

beschrieben werden, wobei
- M²⁺ =: eines oder mehrere der Metalle aus der Gruppe Mg, Ca, Sr, Zn oder Sn ist,
- M³⁺ =: Al, oder B ist,
- Aⁿ: ein Anion mit der Valenz n darstellt,
b eine Zahl von 1 - 2 ist,
0 < x 0,5 ist,
m eine Zahl von 0 - 20 ist.
Bevorzugt sind Verbindungen mit
Aⁿ = OH⁻, ClO₄⁻, HCO₃⁻, CH₃COO⁻, C₆H₅COO⁻, CO₃²⁻, (CHOHCOO)₂²⁻, (CH₂COO)₂²⁻, CH₃CHOHCOO⁻, HPO₃⁻ oder HPO₄²⁻; Beispiele für Hydrotalcite sind
Al₂O₃·6MgO·CO₂·12H₂O (i), Mg_{4,5}Al₂(OH)₁₃·CO₃·3,5H₂O (ii) , 4MgO·Al₂O₃·CO₂·9H₂O (iii) , 4MgO·Al₂O₃·CO₂·6H₂O, ZnO·3MgO·Al₂O₃·CO₂·8-9H₂O und ZnO·3MgO·Al₂O₃·CO₂·5-6H₂O Ganz besonders bevorzugt sind die Typen (i), (ii) und (iii).

### Zeolithe (Alkali bzw. Erdalkalialumosilikate)

Sie können durch die folgende allgemeine Formel M_{x/n}[(AlO₂)ₓ(SiO₂)_{y}] ·wH₂O beschrieben werden, worin n die Ladung des Kations M;
M ein Element der ersten oder zweiten Hauptgruppe, wie Li, Na, K, Mg, Ca, Sr oder Ba;
y : x eine Zahl von 0,8 bis 15, bevorzugt von 0,8 bis 1,2; und
w eine Zahl von 0 bis 300, bevorzugt von 0,5 bis 30, ist. Beispiele für Zeolithe sind Natriumalumosilikate der Formeln
Na₁₂Al₁₂Si₁₂O₄₈ · 27 H₂O [Zeolith A], Na₆Al₆Si₆O₂₄ · 2 NaX · 7,5 H₂O, X= OH, Halogen, ClO₄ [Sodalith] ; Na₆Al₆Si₃₀O₇₂ · 24 H₂O; Na₈Al₈Si₄₀O₉₆ · 24 H₂O; Na₁₆Al₁₆Si₂₄O₈₀ · 16 H₂O; Na₁₆Al₁₆Si₃₂O_{96 ·} 16 H₂O; Na₅₆Al₅₆Si₁₃₆O₃₈₄ · 250 H₂O (Zeolith Y], Na₈₆Al₈₆Si₁₀₆O₃₈₄ · 264 H₂O [Zeolith X] ;
oder die durch teilweisen bzw. vollständigen Austausch der Na-Atome durch Li-, K-, Mg-, Ca-, Sr- oder Zn-Atome darstellbaren Zeolithe wie
(Na,K)₁₀Al₁₀Si₂₂O₆₄ · 20 H₂O ; Ca_{4,5}Na₃[(AlO₂)₁₂(SiO₂)₁₂] · 30 H₂O; K₉Na₃ [(AlO₂)₁₂(SiO₂)₁₂] · 27 H₂O.
Ganz besonders bevorzugt sind Na-Zeolith A und Na-Zeolith P.
Die Hydrotalcite und/oder Zeolithe können in Mengen von beispielsweise 0,1 bis 20, zweckmäßig 0,1 bis 10 und insbesondere 0,1 bis 5 Gew.-Teilen, bezogen auf 100 Gew.-Teile halogenhaltiges Polymere, angewandt werden.

### Füllstoffe

Füllstoffe wie beispielsweise Calciumcarbonat, Dolomit, Wollastonit, Magnesiumoxid, Magnesiumhydroxid, Silikate, China-Clay, Talk, Glasfasern, Glaskugeln, Holzmehl, Glimmer, Metalloxide, oder Metallhydroxide, Ruß, Graphit, Gesteinsmehl, Schwerspat, Glasfasern, Talk, Kaolin und Kreide verwandt. Bevorzugt ist Kreide (HANDBOOK OF PVC FORMULATING E. J. Wickson, John Wiley & Sons, Inc., 1993, SS. 393 - 449) und Verstärkungsmittel (TASCHENBUCH der Kunststoffadditive, R. Gächter & H. Müller, Carl Hanser, 1990, S. 549 - 615).

Die Füllstoffe können in einer Menge von vorzugsweise mindestens 1 Teil, beispielsweise 5 bis 200, zweckmäßig 10 bis 150 und insbesondere 15 bis 100 Gew.-Teilen, bezogen auf 100 Gew.-Teile PVC, eingesetzt werden.

### Metallseifen

Metallseifen sind in der Hauptsache Metallcarboxylate bevorzugt längerkettiger Carbonsäuren. Geläufige Beispiele sind Stearate, Oleate, Palmitate, Ricinolate, Hydroxystearate, Dihydroxystearate und Laurate, auch Oleate und Salze kürzerkettiger aliphatischer oder aromatischer Carbonsäuren wie Essigsäure, Propionsäure, Buttersäure, Valeriansäure, Hexansäure, Sorbinsäure, Oxalsäure, Malonsäure, Maleinsäure, Anthranilsäure, Bernsteinsäure, Glutarsäure, Adipinsäure, Fumarsäure, Zitronensäure, Benzoesäure, Salicylsäure, Phthalsäuren, Hemimellithsäure, Trimellithsäure, Pyromellithsäure.
Als Metalle seien genannt: Li, Na, K, Mg, Ca, Sr, Ba, Zn, Al, La, Ce und Seltenerdmetalle. Oft verwendet man sogenannte synergistische Mischungen wie Barium/Zink-, Magnesium/Zink-, Calcium/Zink- oder Calcium/Magnesium/Zink-Stabilisatoren. Die Metallseifen können einzeln oder in Mischungen eingesetzt werden. Eine Übersicht über gebräuchliche Metallseifen findet sich in Ullmanns Encyclopedia of Industrial Chemistry, 5^{th} Ed., Vol. A16 (1985), S. 361 ff.).
Die Metallseifen bzw. deren Mischungen können in einer Menge von beispielsweise 0,001 bis 10 Gew.-Teilen, zweckmäßig 0,01 bis B Gew.-Teilen, besonders bevorzugt 0,05 bis 5 Gew.-Teilen, bezogen auf 100 Gew.-Teile PVC, angewandt werden.

### Alkali und Erdalkali-Verbindungen

Darunter versteht man vornehmlich die Carboxylate der oben beschriebenen Säuren, aber auch entsprechende Oxide bzw. Hydroxide oder Carbonate. Es kommen auch deren Gemische mit organischen Säuren in Frage. Beispiele sind LiOH, NaOH, KOH, CaO, Ca(OH₂), MgO, Mg(OH)₂, Sr(OH)₂, Al(OH)₃, CaCO₃ und MgCO₃ (auch basische Carbonate, wie beispielsweise Magnesia Alba und Huntit), sowie fettsaure Na- und K-Salze. Bei Erdalkali- und Zn-Carboxylaten können auch deren Addukte mit MO oder M(OH)₂ (M = Ca, Mg, Sr oder Zn), sogenannte "overbased" Verbindungen, zum Einsatz kommen. Bevorzugt werden zusätzlich zu den erfindungsgemäßen Stabilisatoren Alkali-, Erdalkali- und/oder Aluminiumcarboxylate eingesetzt.

### Gleitmittel

Als Gleitmittel kommen beispielsweise in Betracht Fettsäuren, Fettalkohole, Montanwachs, Fettsäureester, PE-Wachse, Amidwachse, Chlorparaffine, Glycerinester oder Erdalkaliseifen, ferner Fettketone sowie Gleitmittel auf oder Kombinationen davon, wie in EP 0 259 783 aufgeführt. Bevorzugt sind Stearinsäure, Stearinsäureester und Calciumstearat.

### Weichmacher

Als organische Weichmacher kommen beispielsweise solche aus den folgenden Gruppen und deren Mischungen in Betracht:
A) Phthalsäureester: wie bevorzugt Di-2-ethylhexyl-, Di-iso-nonyl- und Di-iso-decylphthalat, die auch unter den gebräuchlichen Abkürzungen DOP (Dioctylphthalat, Di-2-ethylhexyl-phthalat), DINP (Diisononylphthalat), DIDP (Di-isodecylphthalat), Di(ⁿC₉-C₁₂)phthalate bekannt sind z.B. Ester aliphatischer Dicarbonsäuren, insbesondere Ester von Adipin-, Azelain- und Sebazinsäure: wie bevorzugt Di-2-ethylhexyladipat und Di-iso-octyladipat.
C) Trimellithsäureester, beispielsweise Tri-2-ethylhexyltrimellithat, Tri-iso-decyltrimellithat (Gemisch), Tri-iso-tridecyltrimellithat, Tri-iso-octyltrimellithat (Gemisch) sowie Tri-C₆-C₈-alkyl, Tri-C₆-C₁₀-alkyl-, Tri-C₇-C₉-alkyl- und Tri-C₉-C₁₁-alkyltrimellithate. Gebräuchliche Abkürzungen sind TOTM (Trioctyltrimellitat, Tri-2-ethylhexyl-trimellitat), TIDTM (Triisodecyltrimellitat) und TITDTM (Triisotridecyltrimellitat).
D) Epoxyweichmacher: In der Hauptsache sind das epoxidierte ungesättigte Fettsäuren wie z. B. epoxidiertes Sojabohnenöl (wie unter den epoxidierten Fettsäureestern beschrieben).
E) Polymerweichmacher: Die gebräuchlichsten Ausgangsmaterialien für die Herstellung der Polyesterweichmacher sind: Dicarbonsäuren wie Adipin-, Phthal-, Azelain- und Sebacinsäure; Diole wie 1,2-Propandiol, 1,3-Butandiol, 1,4-Butandiol, 1,6-Hexandiol, Neopentylglycol und Diethylenglykol.
F) Phosphorsäureester: Eine Definition dieser Ester ist im vorstehend genannten "Taschenbuch der Kunststoffadditive" Kapitel 5.9.5, SS. 408 - 412, zu finden. Beispiele für solche Phosphorsäureester sind Tributylphosphat, Tri-2-ethylbutylphosphat, Tri-2-ethylhexylphosphat, Trichlorethylphosphat, 2-Ethyl-hexyl-di-phenylphosphat, Kresyldiphenylphosphat, Triphenylphosphat, Trikresylphosphat und Trixylenylphosphat.
G) Chlorierte Kohlenwasserstoffe (Paraffine)
H) Kohlenwasserstoffe
I) Monoester, z. B. Butyloleat, Phenoxyethyloleat, Tetrahydrofurfuryloleat und Alkylsulfonsäureester.
J) Glykolester, z. B. Diglykolbenzoate.
K) Citronensäureester

Eine Definition dieser Weichmacher und Beispiele für solche sind in "Kunststoffadditive", R. Gächter/H. Müller, Carl Hanser Verlag, 3. Aufl., 1989, Kapitel 5.9.6, Seiten 412 - 415, sowie in "PVC Technology ", W. V. Titow, 4^{th}. Ed., Elsevier Publ., 1984, Seiten 165 - 170 angegeben. Es können auch Mischungen unterschiedlicher Weichmacher verwandt werden.
Die Weichmacher können in einer Menge von beispielsweise 5 bis 20 Gew.-Teilen, zweckmäßig 10 bis 20 Gew.-Teilen, bezogen auf 100 Gew.-Teile PVC, angewandt werden. Hart- bzw. Halbhart-PVC enthält bevorzugt bis zu 10 %, besonders bevorzugt bis zu 5 % oder keinen Weichmacher.

### Pigmente

Geeignete Stoffe sind. dem Fachmann bekannt. Beispiele für anorganische-Pigmente sind TiO₂; Pigmente auf Zirkonoxidbasis, BaSO₄, Zinkoxid (Zinkweiss) und Lithopone (Zinksulfid/Bariumsulfat), Ruß, Russ-Titandioxid-Mischungen, Eisenoxidpigmente, Sb₂O₃, (Ti,Ba,Sb)O₂, Cr₂O₃, Spinelle wie Cobaltblau und Cobaltgrün, Cd(S,Se), Ultramarinblau. Organische Pigmente sind z. B. Azopigmente, Phthalocyaninpigmente, Chinacridonpigmente, Perylenpigmente, Diketo-pyrrolopyrrolpigmente und Anthrachinonpigmente. Bevorzugt ist TiO₂ auch in mikronisierter Form. Es können auch Mischungen unterschiedlicher Pigmente verwendet werden. Eine Definition und weitere Beschreibungen finden sich im "Handbook of PVC Formulating", E. J.Wickson, John Wiley & Sons, New York, 1993.

### Phosphite (Phosphorigsäuretriester)

Organische Phosphite sind bekannte Co-Stabilisatoren für chlorhaltige Polymere. Beispiele sind Trioctyl-, Tridecyl-, Tridodecyl-, Tritridecyl-, Tripentadecyl-, Trioleyl, Tristearyl-, Triphenyl-, Trikresyl-, Tris-nonylphenol, Tris-2,4-t-butyl-phenyl- oder Tricyclohexylphosphit. Weitere geeignete Phosphite sind verschieden gemischte Aryl-dialkyl- bzw. Alkyl-diarylphosphite wie Phenyldioctyl-, Phenyldidecyl-, Phenyldidodecyl-, Phenylditridecyl-, Phenylditetradecyl-, Phenyldipentadecyl-, Octyldiphenyl-, Decycldiphenyl-, Undecyldiphenyl-, Dodecyldiphenyl-, Tridecyldiphenyl-, Tetradecyldiphenyl-, Pentadecyldiphenyl-, Oleyldiphenyl-, Stearyldiphenyl- und Dodecyl-bis-2,4-di-t-butylphenylphosphit.
Weiterhin können auch- Phosphite verschiedener Di- bzw. Polyole vorteilhaft verwandt werden: z. B. Tetraphenyldipropylenglykoldiphosphit, Polydipropylenglykolphenylphosphit, Tetramethylolcyclohexanol-decyldiphosphit, Tetramethylolcyclohexanol-butoxyethoxy-ethyldiphosphit, Tetramethylolcyclohexanol-nonylphenyldiphosphit, Bisnonylphenyl-di-trimethylolpropandiphosphit, Bis-2-butoxyethyl-di-trimethylolpropandiphosphit, Trishydroxyethylisocyanurat-hexadecyltriphosphit, Didecylpentaerythritdiphosphit, Distearylpentaerythritdiphosphit, Bis-2,4-di-t-butylphenylpentaerythritdiphosphit, sowie Gemische dieser Phosphite und Aryl/alkylphosphit-Gemische der statistischen Zusammensetzung (H₁₉C₉-C₆H₄)O_{1,5}P(OC_{12,13}H_{25,27})_{1,5} oder [C₈H₁₇-C₆H₄-O-]₂P[i-C₈H₁₇O], (H₁₉C₉-C₆H₄)O_{1,5}P(OC_{9,11}H_{19,23})_{1,5}- Technische Beispiele sind Naugard P, Mark CH 300, Mark CH 301, Mark CH 302, Mark CH 304 und Mark CH 55.
Die organischen Phosphite oder deren Mischungen insgesamt können in einer Menge von beispielsweise 0,01 bis 10 Gew.-Teilen, zweckmäßig 0,05 bis 5 und insbesondere 0,1 bis 3 Gew.-Teilen, bezogen auf 100 Gew.-Teile PVC, angewandt werden.

### Epoxidierte Fettsäureester und andere Epoxidverbindungen

Die erfindungsgemäße Stablisatorkombination kann zusätzlich vorzugsweise mindestens einen epoxidierten Fettsäureester enthalten. Es kommen dafür vor allem Ester von Fettsäuren aus natürlichen Quellen (Fettsäureglyceride), wie Sojaöl oder Rapsöl, in Frage. Es können aber auch synthetische Produkte zum Einsatz kommen, wie epoxidiertes Butyloleat. Ebenso verwendet werden können epoxidiertes Polybutadien und Polyisopren, gegebenenfalls auch in partiell hydroxylierter Form, oder Glycidylacrylat und Glycidylmethacrylat als Homo- bzw. Copolymer. Diese Epoxyverbindungen können auch auf eine Alumosalz-Verbindung aufgebracht sein; siehe hierzu auch DE-A-4 031 818.
Die Epoxidverbindungen können in einer Menge von vorzugsweise mindestens 0,1 Gew.-Teilen, beispielsweise 0,1 bis 50 Gew.-Teilen, zweckmäßig 1 bis 30 und insbesondere 1 bis 25 Gew.-Teilen, bezogen auf 100 Gew.-Teile PVC, eingesetzt werden.

### Antioxidantien

Alkylierte Monophenole, z. B. 2,6-Di-tert-butyl-4-methylphenol, Alkylthiomethylphenole, z. B. 2,4-Dioctylthiomethyl-6-tert-butylphenol, Alkylierte Hydrochinone, z. B. 2,6-Di-tert-butyl-4-methoxyphenol, Hydroxylierte Thiodiphenylether, z. B. 2,2'-Thio-bis-(6-tert-butyl-4-methylphenol), Alkyliden-Bisphenole, z. B. 2,2'-Methylen-bis-(6-tert-butyl-4-methylphenol), Benzylverbindungen, z. B. 3,5,3',5'-Tetra-tert-butyl-4,4'-dihydroxydibenzylether, Hydroxybenzylierte Malonate, z. B. Dioctadecyl-2,2-bis-(3,5-di-tert-butyl-2-hydroxybenzyl)-malonat, Hydroxybenzyl-Aromaten, z. B. 1,3,5-Tris-(3,5-di-tert-butyl-4-hydroxybenzyl)-2,4,6-trimethylbenzol, Triazinverbindungen, z. B. 2,4-Bis-octylmercapto-6-(3,5-di-tert-butyl-4-hydroxyanilino)-1,3,5-triazin, Phosphonate und Phosphonite, z. B. Dimethyl-2,5-di-tert-butyl-4-hydroxybenzylphosphonat, Acylaminophenole, z. B. 4-Hydroxylaurinsäureanilid, Ester der beta-(3,5-Di-tert-butyl-4-hydroxyphenyl)-propionsäure, der beta-(5-tert-Butyl-4-hydroxy-3-methylphenyl)-propionsäure, der beta-(3,5-Dicyclohexyl-4-hydroxyphenyl)-propionsäure, Ester der 3,5-Di-tert-butyl-9-hydroxyphenylessigsäure mit ein- oder mehrwertigen Alkoholen, Amide der beta-(3,5-Di-tert-butyl-4-hydroxyphenyl)-propionsäure, wie z. B. N,N'-Bis-(3,5-di-tert-butyl-4-hydroxyphenylpropionyl) -hexamethylendiamin, Vitamin E (Tocopherol) und Abkömmlinge. Es können auch Mischungen der Antioxidantien verwendet werden.
Technische Beispiele sind z.B. Naugard 10, Naugard 76, Naugard BHT und Naugard 45.
Die Antioxidantien können in einer Menge von beispielsweise 0,01 bis 10 Gew.-Teilen, zweckmäßig 0,1 bis 10 Gew.-Teilen und insbesondere 0,1 bis 5 Gew.-Teilen, bezogen auf 100 Gew.-Teile PVC, angewandt werden.

### UV-Absorber und Lichtschutzmittel

Beispiele dafür sind: 2-(2'-Hydroxyphenyl)-benztriazole, wie z. B. 2-(2'-Hydroxy-5'-methylphenyl)-benztriazol, 2-Hydroxybenzophenone, Ester von gegebenenfalls substituierten Benzoesäuren, wie z. B. 4-tert-Butyl-phenylsalicylat, Phenylsalicylat, Acrylate, Nickelverbindungen, Oxalsäurediamide, wie z. B. 9,4'-Di-octyloxy-oxanilid, 2,2'-Di-octyloxy-5,5'-di-tert-butyl-oxanilid, 2-(2-Hydroxyphenyl)-1,3,5-triazine, wie z. B. 2,4,6-Tris(2-hydroxy-4-octyloxyphenyl)-1,3,5-triazin, 2-(2-Hydroxy-4-octyloxyphenyl)-4,6-bis-(2,9-dimethylphenyl)-1,3,5-triazin, Sterisch gehinderte Amine, wie z. B. Bis (2,2,6,6-tetramethyl-piperidin-4-yl)-sebacat, Bis(2,2,6,6-tetramethyl-piperidin-4-yl)-succinat. Es können auch Mischungen der UV-Absorber und/oder Lichtschutzmittel verwendet werden.

### Treibmittel

Treibmittel sind z. B. organische Azo- und Hydrazoverbindungen, Tetrazole, Oxazine, Isatosäureanhydrid, sowie Soda und Natriumbicarbonat. Bevorzugt sind Azodicarbonamid und Natriumbicarbonat sowie deren Mischungen.

Definitionen und Beispiele für Schlagzähmodifikatoren und Verarbeitungshilfen, Geliermittel, Antistatika, Biocide, Metalldesaktivatoren, optische Aufheller, Flammschutzmittel, Antifogging-agents sowie Kompatibilisatoren sind beschrieben in "Kunststoffadditive", R. Gächter/H. Müller, Carl Hanser Verlag, 3. und 4. Aufl., 1989 und 2001, und im "Handbook of Polyvinyl Chloride Formulating" E. J. Wilson, J. Wiley & Sons, 1993, sowie in "Plastics Additives" G. Pritchard, Chapman & Hall, London, 1st Ed., 1998.
Schlagzähmodifikatoren sind ferner ausführlich beschrieben in "Impact Modifiers for PVC", J. T. Lutz/D. L. Dunkelberger, John Wiley & Sons, 1992.

Es können ein und auch mehrere Zusatzstoffe und/oder deren Mischungen verwendet werden.

Ein weiterer Gegenstand der Erfindung sind Zusammensetzungen, die ein chlorhaltiges Polymer und ein erfindungsgemäßes Stabilisatorsystem enthalten.

Ein weiterer Gegenstand der Erfindung sind Zusammensetzungen, die ein chlorhaltiges Polymer und ein erfindungsgemäßes Stabilisatorsystem, zusätzlich mit einer oder mehreren weiteren Komponenten aus einer der Gruppen wie Glycidyl-Verbindungen, Phosphite, Hydrotalcite, Zeolithe, Alkali/Erdalkali-Verbindungen, epoxidierte Fettsäureester, enthalten.

Bei diesen Zusammensetzungen sind die Verbindungen der allgemeinen Formeln (I) zur Erzielung der Stabilisierung im chlorhaltigen Polymer zweckmäßig zu 0,01 bis 10, vorzugsweise zu 0,05 bis 5, insbesondere zu 0,1 bis 2 Gew.-Teilen, bezogen auf 100 Gew.-Teile PVC, zu verwenden.

Die Perchlorat-Verbindungen können in einer Menge von beispielsweise. 0,001 bis 5, zweckmäßig 0,01 bis 3, besonders bevorzugt 0,01 bis 2 Gew.- Teilen, bezogen auf 100 Gew.-Teile PVC, angewandt werden.

Die Co-Additive wie Glycidyl-Verbindungen, Phosphite, Hydrotalcite, Zeolithe, Alkali/Erdalkali-Verbindungen, epoxidierte Fettsäureester werden mit 0,01 - 15 Gew.-Teilen, vorzugsweise 0,1- 10, insbesondere 2 - 3 Gew.-Teilen eingesetzt.

Beispiele für die zu stabilisierenden chlorhaltige Polymere sind:
Polymere des Vinylchlorides, Vinylidenchlorids, Vinylharze, enthaltend Vinylchlorideinheiten in deren Struktur, wie Copolymere des Vinylchlorids und Vinylester von aliphatischen Säuren, insbesondere Vinylacetat, Copolymere des Vinylchlorids mit Estern der Acryl- und Methycrylsäure und mit Acrylnitril, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymerische Ester der Acrylsäure und der alpha-substituierten Acrylsäure; Polymere von chlorierten Styrolen, zum Beispiel Dichlorstyrol; Chlorkautschuke; chlorierte Polymere des Ethylens; Polymere und nachchlorierte Polymere von Chlorbutadiens und deren Copolymere mit Vinylchlorid, chlorierte Natur- und Synthesekautschuke, sowie Mischungen der genannten Polymere unter sich oder mit anderen polymerisierbaren Verbindungen. Im Rahmen dieser Erfindung sind unter PVC auch Copolymerisate mit polymerisierbaren Verbindungen wie Acrylnitril, Vinylacetat oder ABS zu verstehen, wobei es sich um Suspensions-, Masse- oder Emulsionspolymerisate handeln kann. Bevorzugt ist ein PVC-Homopolymer, auch in Kombination mit Polyacrylaten.

Ferner kommen auch Pfropfpolymerisate von PVC mit EVA, ABS und MBS in Betracht. Bevorzugte Substrate sind auch Mischungen der vorstehend genannten Homo-und Copolymerisate, insbesondere Vinylchlorid-Homopolymerisate, mit anderen thermoplastischen oder/und elastomeren Polymeren, insbesondere Blends mit ABS, MBS, NBR, SAN, EVA, CPE, MBAS, PMA, PMMA, EPDM und Polylactonen, insbesondere aus der Gruppe ABS, NBR, NAR, SAN und EVA. Die verwandten Abkürzungen für die Copolymerisate sind dem Fachmann geläufig und bedeuten folgendes: ABS: Acrylnitril-Butadien-Styrol; SAN: Styrol-Acrylnitril; NBR: Acrylnitril-Butadien; NAR: Acrylnitril-Acrylat; EVA: Ethylen-Vinylacetat. Es kommen insbesondere auch Styrol-Acrylnitril-Copolymerisate auf Acrylat-Basis (ASA) in Betracht. Bevorzugt als Komponente sind in diesem Zusammenhang Polymerzusammensetzungen, die als Komponenten (i) und (ii) eine Mischung aus 25-75 Gew.-% PVC und 75-25 Gew.-% der genannten Copolymerisate enthalten. Von besonderer Bedeutung sind als Komponente Zusammensetzungen, aus (i) 100 Gewichtsteilen PVC, und (ii) 0 -300 Gewichtsteilen ABS und/oder mit SAN modifiziertes ABS und 0-80 Gewichtsteilen der Copolymeren NBR, NAR und/oder EVA, insbesondere jedoch EVA.

Weiterhin kommen zur Stabilisierung im Rahmen dieser Erfindung auch insbesondere Recyclate chlorhaltiger Polymere in Frage, wobei es sich hierbei um die oben näher beschriebenen Polymere handelt, welche durch Verarbeitung, Gebrauch oder Lagerung eine Schädigung erfahren haben. Besonders bevorzugt ist PVC-Recyclat.

Die erfindungsgemäß mitverwendbaren Verbindungen sowie die chlorhaltigen Polymeren sind dem Fachmann allgemein bekannt und werden detailliert beschrieben in "Kunstoffadditive", R. Gächter/H. Müller, Carl Hanser Verlag, 3. Aufl. und 4. Aufl., 1989 und 2001; in der DE 197 41 778 und der EP-A 99 105 418.0 vom 17.03.1999, auf welche hiermit ausdrücklich Bezug genommen wird.

Die erfindungsgemäße Stabilisierung ist besonders bei Hart-PVC-Formulierungen für transparente und nicht transparente Anwendungen von Vorteil, wie sie für Rohre, Profile und Platten üblich sind. Für transparente Anwendungen werden vorzugsweise Verbindungen der Formeln (I) eingesetzt, welche Schmelzpunkte unterhalb ca. 190 °C aufweisen. Ebenso kann die Stabilisierung für halbharte und weiche Formulierungen sowie in Plastisolen verwendet werden. Die Stabilisierung kann ohne Schwermetallverbindungen (Sn-, Pb-, Cd-, Zn-Stabilisatoren) durchgeführt werden, und ist besonders gut geeignet für die Herstellung von physiologisch einwandfreien Gebrauchsgegenständen aus PVC, die auch der medizinischen Anwendung dienen können.

Zweckmäßig kann die Einarbeitung der Stabilisator-Systeme nach folgenden Methoden erfolgen: als Emulsion oder Dispersion; als Trockenmischung während des Vermischens von Zusatzkomponenten oder Polymermischungen; durch direktes Zugeben in die Verarbeitungsapparatur (z. B. Kalander, Mischer, Kneter, Extruder und dergleichen) oder als Lösung oder Schmelze bzw. als Flakes oder Pellets in staubfreier Form als One-Pack.

Das erfindungsgemäß stabilisierte PVC, das die Erfindung ebenfalls betrifft, kann auf an sich bekannte Weise hergestellt werden, wozu man unter Verwendung an sich bekannter Vorrichtungen wie der oben genannten Verarbeitungsapparaturen das erfindungsgemäße Stabilisatorsystem und gegebenenfalls weitere Zusätze mit dem PVC vermischt. Hierbei können die Stabilisatoren einzeln oder in Mischung zugegeben werden oder auch in Form sogenannter Masterbatches.

Das nach vorliegender Erfindung stabilisierte PVC kann auf bekannte Weisen in die gewünschte Form gebracht werden. Solche Verfahren sind beispielsweise Mahlen, Kalandrieren, Extrudieren, Spritzgießen oder Spinnen, ferner Extrusions-Blasen. Das stabilisierte PVC kann auch zu Schaumstoffen verarbeitet werden.

Ein erfindungsgemäß stabilisiertes PVC eignet sich z. B. besonders für Hohlkörper (Flaschen), Verpackungsfolien (Tiefziehfolien), Blasfolien, Rohre, Schaumstoffe, Schwerprofile (Fensterrahmen), Lichtwandprofile, Bauprofile, Sidings, Fittings, Bürofolien und Apparatur-Gehäuse (Computer, Haushalteräte).
Bevorzugt sind PVC-Hartschaumstoff-Formkörper und PVC-Rohre wie für Trink- oder Abwasser, Druckrohre, Gasrohre, Kabelkanal- und Kabelschutzrohre, Rohre für Industrieleitungen, Sickerrohre, Abflußrohre, Dachrinnenrohre und Drainagerohre. Näheres hierzu siehe "Kunststoffhandbuch PVC", Band 2/2, W. Becker/H. Braun, 2. Aufl., 1985, Carl Hanser Verlag, Seiten 1236 - 1277.

Die folgenden Beispiele erläutern die Erfindung, ohne sie jedoch zu beschränken. Teile- und Prozentangaben beziehen sich, wie auch in der übrigen Beschreibung, auf das Gewicht.

### Beispiel 1: Dehydrochlorierungs-Test von paniertem PVC-Pulver

Die Mischungen aus PVC + Additiven gemäß den folgenden Tabellen 1A-3A und Tabelle 4 wurden mit 150 ml Methanol angeteigt bzw. gelöst. Nachfolgend wurde am Rotationsverdampfer unter vermindertem Druck (< 50 mbar) bei einer Bad-Temperatur von 40-95°C zur Trockene eingeengt.

Das nach dieser Vorschrift panierte PVC-Pulver wurde anschließend einem Dehydrochlorierungs-Test (DHC) bei T = 180°C nach DIN 53381 unterzogen. Die Prüfung der Thermostabilität von PVC beruht auf der durch Hitzeeinwirkung ausgelösten Abspaltung von gasförmigen Chlorwasserstoff. Die Thermostabilität von PVC im Sinne dieser Norm ist die Zeit, nach der durch Hitzeeinwirkung eine irreversible chemische Veränderung durch Chlorwasserstoffabspaltung eingetreten ist.
Je höher der gefundene DHC-Wert (200 µS/cm) in min ist, desto wirksamer verhindert das Stabilisatorsystem die Schädigung des chlorhaltigen Polymers.

Die Ergebnisse sind in die Tabellen 1B-3B und Tabelle 4 eingearbeitet.

### Beispiel 2: Dehydrochlorierungs-Test von Walzfellen

Eine Vormischung aus PVC + Additiven gemäß den in den Tabellen 1A-3A angegebenen Mengen wurden auf einem Mischwalzwerk 5 Minuten bei 180 °C gewalzt. Vom gebildeten Walzfell wurden Testfolienstreifen von 0,5 mm Dicke entnommen und einem Dehydrochlorierungstest (DHC) bei T = 180 °C nach DIN 53381 unterzogen (vgl. hierzu Beispiel 1).

Die Ergebnisse sind in die Tabellen 1B-3B eingearbeitet.

**Tabelle 1A**

| **Dehydrochlorierungstest von paniertem PVC-Pulver bei 180°C** | | | | | | | | |
|---|---|---|---|---|---|---|---|---|
| **Mischung** | **2/1** | **2/2** | **2/3** | **2/4** | **2/5** | **2/6** | **2/7** | **2/8** |
| Norvinyl S 6775 (S-PVC K-Wert 67) | 100 | 100 | 100 | 100 | 100 | 100 | 100 | 100 |
| Ca-Stearat | 0,6 | 0,6 | 0, 6 | 0, 6 | 0, 6 | 0, 6 | 0, 6 | 0, 6 |
| Wessalith P®¹⁾ | 1,0 | 1,0 | | | | | | |
| Araldit GY 250®²⁾ | | | 1, 0 | 1, 0 | | | | |
| Precal 50 S®³⁾ | | | | | 1,0 | 1,0 | | |
| Alkamizer I®⁴⁾ | | | | | | | 1,0 | 1,0 |
| **Stabilisator a)** CD 36-0020⁵⁾ | | 0,1 | | 0,1 | | 0,1 | | 0,1 |
| **Stabilisator b)** 1,4-Butandiol-bis (β-aminocrotonat) | 0,3 | 0,2 | 0,3 | 0,2 | 0,3 | 0,2 | 0,3 | 0,2 |
| **DHC (200 µS/cm) in min** | 57 | 88 | 64 | 127 | 55 | 86 | 65 | 104 |

| | | | | | | | | |
|---|---|---|---|---|---|---|---|---|
| ¹⁾ Na-Zeolith A ex Fa. Degussa | | | | | | | | |
| ²⁾ Bisphenol-A-diglycidylether (flüssiges Epoxid) ex Fa Ciba | | | | | | | | |
| ³⁾ Ca-Hydroxid ex Fa. Schaefer Kalk | | | | | | | | |
| ⁴⁾ Hydrotalcit ex Fa. KYOWA (japan) | | | | | | | | |
| ⁵⁾ 30%ige Natriumperchlorat-Monohydrat-Lösung in Butyldiglykol | | | | | | | | |

**Tabelle 1B**

| **Dehydrochlorierungstest von Walzfellen bei 180°C** | | | | | | |
|---|---|---|---|---|---|---|
| **Mischung** | **2/1** | **2/2** | **2/3** | **2/4** | **2/5** | **2/6** |
| Norvinyl S 6775 (S-PVC K-Wert 67) | 100 | 100 | 100 | 100 | 100 | 100 |
| Ca-Stearat | 0,6 | 0,6 | 0,6 | 0,6 | 0,6 | 0,6 |
| Loxiol G 71 S⁶⁾ | 0,4 | 0,4 | 0,4 | 0,4 | 0,4 | 0,4 |
| Araldit GY 250®²⁾ | | | 1,0 | 1,0 | | |
| Alkamizer I®⁴⁾ | | | | | 1,0 | 1,0 |
| **Stabilisator a)** CD 36-0020⁵⁾ | | 0,1 | | 0,1 | | 0,1 |
| **Stabilisator b)** 1,4-Butandiol-bis(β-aminocrotonat) | 0,3 | 0,2 | 0,3 | 0,2 | 0,3 | 0,2 |
| **DHC (200 µS/cm) in min** | 40 | 56 | 22 | 137 | 71 | 127 |

| | | | | | | |
|---|---|---|---|---|---|---|
| ²⁾ Bisphenol-A-diglycidylether (flüssiges Epoxid) ex Fa Ciba ³) Ca-Hydroxid ex Fa. Schaefer Kalk | | | | | | |
| ⁴⁾ Hydrotalcit ex Fa. KYOWA (Japan) | | | | | | |
| ⁵⁾ 30%ige Matriumperchlorat-Monohydrat-Lösung in Butyldiglykol | | | | | | |
| ⁶⁾ Loxiol G 71 S = Komplexester/Gleitmittel ex Fa. Henkel | | | | | | |

Es zeigt sich, daß die Verwendung von a) Natriumperchlorat-Verbindung und b) 1,4-Butandiol-bis(β-aminocrotonat) zu einer wesentlich besseren Stabilisierung führt als die Verwendung von 1,4-Butandiol-bis(β-aminocrotonat) allein. Des weiteren zeigt sich, daß durch die Zugabe von einem oder mehreren Additiven die Stabilität weiter erhöht werden kann.

**Tabelle 2A**

| **Dehydrochlorierungstest von paniertem PVC-Pulver bei 180°C** | | |
|---|---|---|
| **Mischung** | **3/1** | **3/2** |
| Norvinyl S 6775 (S-PVC K-Wert 67) | 100 | 100 |
| Ca-Stearat | 0,6 | 0,6 |
| Wessalith P®¹⁾ | 1,0 | 1,0 |
| Araldit GY 250®²⁾ | | |
| Precal 50 S®³⁾ | | |
| Alkamizer I®⁴⁾ | | |
| **Stabilisator a)** CD 36-0020⁵⁾ | | 0,1 |
| **Stabilisator b)** Thiodiethylenglycol-bis(β-aminocrotonat) | 0,3 | 0,2 |
| **DHC (200 µS/cm) in min** | 63 | 88 |

| | | |
|---|---|---|
| ¹⁾ Na-Zeolith A ex Fa. Degussa | | |
| ²⁾ Bisphenol-A-diglycidylether (flüssiges Epoxid) ex Fa Ciba | | |
| ³⁾ Ca-Hydroxid ex Fa. Schaefer Kalk | | |
| ⁴⁾ Hydrotalcit ex Fa. KYOWA (Japan) | | |
| ⁵⁾ 30%ige Natriumperchlorat-Monohydrat-Lösung in Butyldiglykol | | |

**Tabelle 2B**

| **Dehydrochlorierungstest von Walzfellen bei 180°C** | | | | | | |
|---|---|---|---|---|---|---|
| **Mischung** | **3/1** | **3/2** | **3/3** | **3/4** | **3/5** | **3/6** |
| Norvinyl S 6775 (S-PVC K-Wert 67) | 100 | 100 | 100 | 100 | 100 | 100 |
| Ca-Stearat | 0,6 | 0,6 | 0,6 | 0,6 | 0,6 | 0,6 |
| Loxiol G 71 *S*⁶) | 0,4 | 0,4 | 0,4 | 0,4 | 0,4 | 0,4 |
| Araldit GY 250®²⁾ | | | 1,0 | 1,0 | | |
| Alkamizer I®⁴⁾ | | | | | 1,0 | 1,0 |
| **Stabilisator a)** CD 36-0020⁵⁾ | | 0,1 | | 0,1 | | 0,1 |
| **Stabilisator b)** Thiodiethylenglycol-bis(β-aminocrotonat) | 0,3 | 0,2 | 0,3 | 0,2 | 0,3 | 0,2 |
| **DHC (200 µS/cm) in min** | 49 | 75 | 14 | 143 | 78 | 134 |

| | | | | | | |
|---|---|---|---|---|---|---|
| ²⁾ Bisphenol-A-diglycidylether (flüssiges Epoxid) ex Fa Ciba ³⁾ Ca-Hydroxid ex Fa. Schaefer Kalk | | | | | | |
| ⁴⁾ Hydrotalcit ex Fa. KYOWA (Japan) | | | | | | |
| ⁵⁾ 30%ige Natriumperchlorat-Monohydrat-Lösung in Butyldiglykol | | | | | | |
| ⁶⁾ Loxiol G 71 S = Komplexester/Gleitmittel ex Fa. Henkel | | | | | | |

Es zeigt sich, daß die Verwendung von a) Natriumperchlorat-Verbindung und b) Thiodiethylenglycol-bis(β-aminocrotonat) zu einer wesentlich besseren Stabilisierung führt als die Verwendung von Thiodiethylenglycol-bis(β-aminocrotonat) allein. Des weiteren zeigt sich, daß durch die Zugabe von einem oder mehreren Additiven die Stabilität weiter erhöht werden kann.

Eine Mischung bestehend aus

| | |
|---|---|
| 100,0 Teile | Norvinyl S 6775 |
| 0,6 Teile | Ca-Stearat |
| 0,4 Teile | Loxiol® G 71 S⁶⁾ |
| 0,6 Teile | Phosphit CH 300⁷⁾ (ex Crompton) |
| 1,0 Teile | Wessalith P/GY 250/Alkamizer I |
| 0,1 Teile | CD 36-0020⁵⁾ |
| 0,2 Teile | organischer Stabilisator |

wurde auf einem Mischwalzwerk 5 Minuten bei 180°C gewalzt. Von den so erhaltenen Walzfellen wurde die Anfangsfarbe des Walzfells als Yellowness Index (YI) nach ASTM D-1925-70 bestimmt. Geringe YI-Werte bedeuten eine gute Stabilisierung bzw. Anfangsfarbe.

Die Ergebnisse sind der folgenden Tabelle 3 zu entnehmen.

**Tabelle 3**

| **Untersuchungen mit und ohne Phosphit CH 300**^{**7)**} **an Walzfellen im Hitzetest Anfangsfarbe AF (YI)** | | | | | |
|---|---|---|---|---|---|
| **Mit Phosphit** | | **Ohne Phosphit** | | | |
| **Versuchs-Nummer** | **HT/AF (YI)** | **Versuchs-Nummer** | **HT/AF (YI)** | **Additiv** | **Stabilisator** |
| | | | | | |
| 385 | 35,84 | 6274 | 43,55 | - | 1,4-Butan-diol-bis (β-amino-crotonat) |
| 391 | 37,08 | 6276 | 42,58 | GY 250 | |
| 392 | 40,21 | 6278 | 41,73 | Alkamizer I | |
| 386 | 34,54 | 6279 | 46,34 | - | Thiodiethylenglykol-bis-(β-amino crotonat) |
| 393 | 35,15 | 6281 | 44,07 | GY 250 | |
| 394 | 38,38 | 6283 | 40,08 | Alkamizer I | |

| | | | | | |
|---|---|---|---|---|---|
| ⁷⁾ CH 300= gemischtes Aryl/Alkyl-phosphit (ex Crompton) | | | | | |

Es zeigt sich, dass die Stabilisierung in Bezug auf die Anfangsfarbe des chlorhaltigen Polymeren durch Verwendung von organischen Stabilisatoren in Kombination mit einer Natriumperchlorat-Formulierung durch Zugabe von Phosphiten noch weiter gesteigert werden kann.

**Tabelle 4 -**

| **Vergleichsversuch Dehydrochlorierungstest von paniertem PVC-Pulver bei 180°C** | | | | | | | | |
|---|---|---|---|---|---|---|---|---|
| **Mischung** | **7/1** | **7/2** | **7/3** | **7/4** | **7/5** | **7/6** | **7/7** | **7/8** |
| Norvinyl S 6775 (S-PVC K-Wert 67) | 100 | 100 | 100 | 100 | 100 | 100 | 100 | 100 |
| Ca-Stearat | 0,6 | 0,6 | 0,6 | 0,6 | 0,6 | 0,6 | 0,6 | 0,6 |
| Wessalith P®¹⁾ | 1,0 | 1,0 | | | | | | |
| Araldit GY 250®²⁾ | | | 1,0 | 1,0 | | | | |
| Precal 50 S®³⁾ | | | | | 1,0 | 1,0 | | |
| Alkamizer I®⁴⁾ | | | | | | | 1,0 | 1,0 |
| **Stabilisator a)** CD 36-0020⁵⁾ | | 0,1 | | 0,1 | | 0,1 | | 0,1 |
| **DHC (200 µS/cm) in min** | 56 | 71 | 67 | 96 | 57 | 60 | 67 | 87 |

| | | | | | | | | |
|---|---|---|---|---|---|---|---|---|
| ¹⁾ Na-Zeolith A ex Fa. Degussa | | | | | | | | |
| ²⁾ Bisphenol-A-diglycidylether (flüssiges Epoxid) ex Fa Ciba | | | | | | | | |
| ³⁾ Ca-Hydroxid ex Fa. Schaefer Kalk | | | | | | | | |
| ⁴⁾ Hydrotalcit ex Fa. KYOWA (Japan) | | | | | | | | |
| ⁵⁾ 30%ige Natriumperchlorat-Monohydrat-Lösung in Butyldiglykol | | | | | | | | |

Es zeigt sich, daß die alleinige Verwendung von a) Natriumperchlorat-Verbindung nur zu geringfügigen Verbesserungen der Stabilität führt im Vergleich zur Stabilität ohne Zugabe eines Stabilisators.

## Patentansprüche

1. Stabilisator system zur Stabilisierung von halogenhaltigen Polymeren umfassend mindestens
a) ein Perchlorat-Salz und
b) mindestens ein oder mehrere Enamine
wobei die Enamine die Formel (I) haben 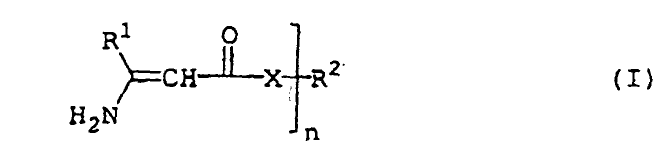 worin bedeuten
n = 1 oder 2 und X = O oder NR¹,
n = 3 - 6 und X= O;
R¹ = H, C₁-C₄-Alkyl, C₂-C₆-Alkenyl, C₆-C₁₀-Aryl, C₇-C₁₈-Alkaryl oder C₇-C₁₈-Aralkyl;
R² (für n = 1) =C₁-C₂₂-Alkyl, C₂-C₂₂-Alkenyl oder Aryl, bevorzugt Phenyl, gegebenenfalls mit bis zu 3 Hydroxy, C₁-C₄-Alkoxy oder C₁-C₉-Alkyl substituiert; oder R² (für n = 2 - 6) = lineares oder verzweigtes C₁₋₂₂-Alkylen, gegebenenfalls durch 1 oder mehrere O- oder S-Atome unterbrochen, wobei R² (für n = 3) auch C₂-C₃-Alkyl-tri-substituiertes Isocyanurat sein kann;
wenn X = NH kann R² auch H sein.

2. Stabilisatorsystem nach Anspruch 1, wobei das Perchlorat-Salz eine Verbindung der Formel M(ClO₄)ₙ ist, wobei M für Li, Na, K, Mg, Ca, Sr, Ba, Zn, Al, La oder Ce steht; n ist entsprechend der Wertigkeit von M 1, 2 oder 3.

3. Stabilisatorsystem nach einem der Ansprüche 1 oder 2, wobei in der Verbindung mit der allgemeinen Formel (I) R¹ = Methyl oder Phenyl und X = Sauerstoff ist.

4. Stabilisaorsystem nach einem der Ansprüche 1 bis 3, wobei in dem Perchlorat-Salz M= Na oder K und n = 1 ist.

5. Stabilisatorsystem nach einem der Ansprüche 1 bis 4, wobei die Verbindungen der allgemeinen Formel (I) 1,4-Butandiol-bis(β-aminocrotonat) oder Thiodiethylenglycol-bis(β-aminocrotonat) sind.

6. Stabilisatorsystem nach einem der Ansprüche 1 bis 5, das zusätzlich gegebenenfalls Metallseifen enthält und/oder gegebenenfalls mindestens einen oder mehrere weitere Stoffe aus den Gruppen der Polyole und Disaccharidalkohole, Glycidylverbindungen, Hydrotalcite, Alkali-/Erdalkalialumosilikate, Alkali-/Erdalkalihydroxide, Erdalkalloxide oder-(hydrogen)carbonate oder Metallcarboxylate, Phosphite, Weichmacher, Antioxidantien, Füllstoffe, Pigmente, Lichtschutzmittel, Gleitmittel und epoxidierte Fettsäureester enthält.

7. Zusammensetzung, enthaltend ein chlorhaltiges Polymer und ein Stabilisatorsystem nach einem der Ansprüche 1 bis 6.

8. Zusammensetzung nach Anspruch 7, **dadurch gekennzeichnet, dass**, bezogen auf 100 Gew. Teile chlorhaltigem Polymer, 0.01-10 Gew.-Teile der Verbindungen der allgemeinen Formel (I) und 0,001-5 Gew. Teile des Perchlorat Salzes enthalten sind.

9. Zusammensetzung nach Anspruch 8, **dadurch gekennzeichnet, dass**, bezogen auf 100 Gew.-Teile chlorhaltigem Polymer, 0.01-10 Gew.-Teile der Verbindungen der allgemeinen Formel (I) und 0,001-5 Gew.-Teile der Perchlorat-Salzes enthalten sind.

10. Verfahren zur Stabilisierung von chlorhaltigen Polymeren durch Zusatz eines Stabilisatorsystems nach einem der Ansprüche 1 bis 7 zu dem chlorhaltigen Polymer.

11. Gebrauchsgegenstände, enthaltend PVC, welches durch ein Stabilisatorsystem nach einem der Ansprüche 1 bis 7 stabilisiert ist.

## Claims

1. Stabilizer system for stabilizing halogen-containing polymers, comprising at least
a) one perchlorate salt and
b) at least one or more enamines
where the enamines have the formula (I) 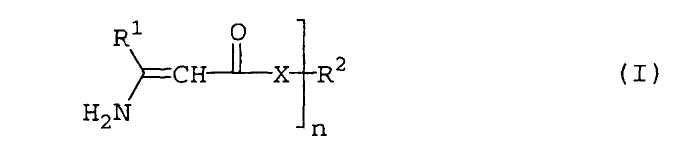 where
n = 1 or 2 and X = O or NR¹,
n = 3 - 6 and X = O;
R¹ = H, C₁-C₄-alkyl, C₂-C₆-alkenyl, C₆-C₁₀-aryl, C₇-C₁₈-alkaryl or C₇-C₁₈-aralkyl;
R² (for n = 1) = C₁-C₂₂-alkyl, C₂-C₂₂-alkenyl or aryl, preferably phenyl, where appropriate substituted with up to 3 hydroxyl, C₁-C₄-alkoxy or C₁-C₉-alkyl; or
R² (for n = 2 - 6) = linear or branched C₁₋₂₂-alkylene, where appropriate interrupted by one or more O atoms or S atoms, where R² (for n = 3) may also be C₂-C₃-alkyl-trisubstituted isocyanurate;
and if X = NH, R² may also be H.

2. Stabilizer system according to Claim 1, where the perchlorate salt is a compound of the formula M(ClO₄)ₙ, where M is Li, Na, K, Mg, Ca, Sr, Ba, Zn, Al, La or Ce; and n is 1, 2 or 3, depending on the valency of M.

3. Stabilizer system according to Claim 1 or 2, where in the compound having the general formula (I) R¹ = methyl or phenyl and X = oxygen.

4. Stabilizer system according to any of Claims 1 to 3, where, in the perchlorate salt, M = Na or K and n = 1.

5. Stabilizer system according to any of Claims 1 to 4, where the compounds of the general formula (I) are 1,4-butanediol bis(β-aminocrotonate) or thio(diethylene glycol) bis(β-aminocrotonate).

6. Stabilizer system according to any of Claims 1 to 5, which also, where appropriate, comprises metal soaps and/or, where appropriate, comprises at least one or more other substances from the groups consisting of the polyols and disaccharide alcohols, glycidyl compounds, hydrotalcites, alkali metal/alkaline earth metal aluminosilicates, alkali metal/alkaline earth metal hydroxides, alkaline earth metal oxides or alkaline earth metal (hydrogen)carbonates, or metal carboxylates, phosphites, plasticizers, antioxidants, fillers, pigments, light stabilizers, lubricants and epoxidized fatty esters.

7. Composition comprising a chlorine-containing polymer and a stabilizer system according to any of Claims 1 to 6.

8. Composition according to Claim 7, **characterized in that**, based on 100 parts by weight of chlorine-containing polymer, there are from 0.01 to 10 parts by weight of the compounds of the general formula (I)and from 0.001 to 5 parts by weight of the perchlorate salt.

9. Composition according to Claim 8, **characterized in that**, based on 100 parts by weight of chlorine-containing polymer, from 0.01 to 10 parts by weight of the compounds of the general formula (I) and 0.001 to 5 parts by weight of the perchlorate salt are present.

10. Process for stabilizing chlorine-containing polymers by adding a stabilizer system according to any of Claims 1 to 7 [sic] to the chlorine-containing polymer.

11. Consumer products comprising PVC which has been stabilized by a stabilizer system according to any of Claims 1 to 7 [sic].

## Revendications

1. Système de stabilisateur destiné à la stabilisation de polymères contenant halogène, comprenant au moins
a) un sel de perchlorate et
b) au moins une ou plusieurs énamines, les énamines ayant la formule (I)
dans laquelle
n = 1 ou 2 et X = O ou NR¹; 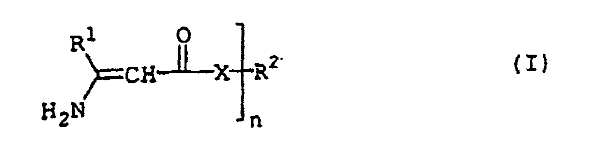 n = 3 à 6 et X = O ;
R¹ = H, alkyle en C₁ à C₄, alcényle en C₂ à C₆, aryle en C₆ à C₁₀, alkaryle en C₇ à C₁₈ ou aralkyle en C₇ à C₁₈ ;
R² (pour n = 1) = alkyle en C₁ à C₂₂, alcényle en C₂ à C₂₂ ou aryle, de préférence phényle, le cas échéant substitué par jusqu'à 3 hydroxy, alcoxy en C₁ à C₄ ou alkyle en C₁ à C₉ ; ou
R² (pour n = 2 à 6) = alkylène en C₁ à C₂₂, linéaire ou ramifié, le cas échéant interrompu par un ou plusieurs atomes de O ou S, R² (pour n = 3) pouvant également être isocyanurate trisubstitué par alkyle en C₂ à C₃ ;
lorsque X = NH, R² peut également représenter H.

2. Système de stabilisateur selon la revendication 1, où le sel de perchlorate représente un composé de formule M(ClO₄)ₙ où M représente Li, Na, K, Mg, Ca, Sr, Ba, Zn, Al, La ou Ce ; n, selon la valence de M, vaut 1, 2 ou 3.

3. Système de stabilisateur selon l'une quelconque des revendications 1 ou 2, où R¹ = méthyle ou phényle et X = oxygène dans le composé de formule générale (I).

4. Système de stabilisateur selon l'une quelconque des revendications 1 à 3, où M = Na ou K et n = 1 dans le sel de perchlorate.

5. Système de stabilisateur selon l'une quelconque des revendications 1 à 4, où les composés de formule générale (I) sont le bis(β-aminocrotonate) de 1,4-butanediol ou le bis(β-aminocrotonate) de thiodiéthylèneglycol.

6. Système de stabilisateur selon l'une quelconque des revendications 1 à 5, qui contient en outre le cas échéant des savons métalliques et/ou le cas échéant au moins une ou plusieurs autres substances des groupes des polyols et des alcools de disaccharide, des composés glycidyle, des hydrotalcites, des aluminosilicates de métal alcalin/alcalino-terreux, des hydroxydes de métal alcalin/alcalino-terreux, des oxydes ou des (hydrogène)carbonates de métal alcalino-terreux, ou des carboxylates métalliques, des phosphites, des plastifiants, des antioxydants, des charges, des pigments, des agents de protection contre la lumière, des lubrifiants et des esters d'acide gras époxydés.

7. Composition contenant un polymère contenant du chlore et un système de stabilisateur selon l'une quelconque des revendications 1 à 6.

8. Composition selon la revendication 7, **caractérisée en ce qu'**elle contient, par rapport à 100 parties en poids de polymère contenant du chlore, 0,01 à 10 parties en poids de composés selon la formule générale (I) et 0,001 à 5 parties en poids du sel de perchlorate.

9. Composition selon la revendication 8, **caractérisée en ce qu'**elle contient, par rapport à 100 parties en poids de polymère contenant du chlore, 0,01 à 10 parties en poids de composés selon la formule générale (I) et 0,001 à 5 parties en poids du sel de perchlorate.

10. Procédé pour la stabilisation de polymères contenant du chlore par addition d'un système de stabilisateur selon l'une quelconque des revendications 1 à 7 au polymère contenant du chlore.

11. Objets utilitaires, contenant du PVC stabilisé par un système de stabilisateur selon l'une quelconque des revendications 1 à 7.
